(19) Europäisches Patentamt / European Patent Office / Office européen des brevets

(11) **EP 2 942 544 A1**

(12) **EUROPEAN PATENT APPLICATION**

(43) Date of publication:
**11.11.2015 Bulletin 2015/46**

(51) Int Cl.:
***F16F 15/123*** (2006.01)

(21) Application number: **15162855.9**

(22) Date of filing: **08.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **15.04.2014   CN 201410149566**

(71) Applicant: **Ford Global Technologies, LLC**
**Dearborn, MI 48126 (US)**

(72) Inventor: **Chan, Oxcan**
**Nanjing (CN)**

(74) Representative: **Harrison IP Limited**
**Box Tree House**
**Northminster Business Park**
**York, Yorkshire YO26 6QU (GB)**

(54) **VEHICLE FLEXIBLE DRIVING PLATE HAVING TORSIONAL DAMPER**

(57)    A flexible driving plate having a torsional damper incorporating springs that are positioned in pockets that are non-linear relative to the direction of rotation of the crankshaft is disclosed. The torsional damper connects an engine crankshaft and a transmission input member wherein the crankshaft has a rotational direction. The damper comprises a drive plate connected to the crankshaft, a driven plate connected to the input member, a plurality of springs, and a like number of spring pockets in which the springs are fitted formed in both the drive plate and the driven plate. A plastic spacer is provided in each spring. The axis of each pocket is at an angle other than 90° relative to the angle of rotational direction of the crankshaft.

FIG - 1

EP 2 942 544 A1

**Description**

TECHNICAL FIELD

The disclosed inventive concept relates generally to flexible driving plates for vehicle transmissions. More particularly, the disclosed inventive concept relates to a flexible driving plate to which has been added a torsional damper to thereby provide additional damping of torsional torque generated by the engine and the isolation of torsional vibration to the drive line in front of the rear dampers.

BACKGROUND OF THE INVENTION

Most modern vehicle powertrains today include an automatic transmission as a standard component of the vehicle's drivetrain. The typical automatic transmission incorporates a flexible driving plate (or flexplate). The flexible driving plate functions in a way not dissimilar from the flywheel found in the manual transmission by providing a mechanical link between the transmission and the engine.
The flexible driving plate is mechanically fastened to the output end of the engine's crankshaft, typically by bolts. The output end of the flexible driving plate is itself attached to the torque converter which itself includes an inner damper assembly. The damper assembly is conventionally bathed in lubricating transmission fluid (ATF or Automatic Transmission Fluid).
The conventional flexible driving plate is composed of steel and, as such, is ordinarily thinner than the conventional cast flywheel. The designation "flexible driving plate" is based on the fact that the plate compensates for misalignments which are typically found in the connection between the engine and the transmission. A small misalignment of the engine and transmission requires a relatively small amount of flexing of the flexible driving plate, while a large misalignment of the engine will consequently require a large amount of flexing.
As demands on engine performance continue to increase the attention being paid to the flexible driving plate as a factor in overall vehicle performance is being examined with greater care. This re-examination is particularly important as the displacement of engines is reduced in a general effort to increase fuel economy. Engines having sizes of 1.5L and 1.0L are being incorporated into vehicles. Inherent in smaller engines is increased torque. For example, a turbocharged, in-line three-cylinder 1.0L engine can generate an overboost torque of 200Nm.
The benefit of smaller engines to fuel economy is noteworthy. However, this benefit does not come without a cost as smaller, high-torque engines are known to produce severe torsional vibration compared with, for example, an in-line four cylinder or a V-6 engine. In addition, the frequency of engine idle harmonics is much lower with the in-line four cylinder or V-6 engine than in the in-line, three-cylinder 1.0L engine. This is so because engines having four or more cylinders generate a drive line frequency which is ordinarily quite low, thus inducing more drive line resonance. On the other hand, test data show that a 1.0L engine fitted to a conventional transmission produces significant undesirable vibrations, this being the result of a low frequency drive line system applied to a low frequency engine. Lower harmonic frequencies are also generated by the typical pick-up truck because of the longer drive shaft required to deliver rotational force from the output end of the transmission to the input of the rear axle. Such a vehicle normally demonstrates a severe lugging issue.
Efforts to reduce or eliminate the vibration produced by 1.5L and 1.0L engines have met with mixed results. For example, through considerable expense a torque converter clutch damper has been designed that provides improved absorption of vibration. However, this approach proved not only to be very expensive but also failed to lock the torque converter at low engine speed as low engine speed generally equals low engine frequency. When engine frequency is in the range of drive line frequency, resonance results which, among other disadvantages, has a negative impact on overall vehicle fuel economy.
Another strategy to cancel out the undesirable vibrations generated by smaller engines has been to employ an extremely balanced crankshaft. On the one hand, the use of the balanced crankshaft had positive results. On the other hand, the use of such a crankshaft is an expensive solution that detracts from the low-cost objective of building and operating the fuel efficient vehicle.
As in so many areas of vehicle technology there is always room for improvement related to steps that can be taken to reduce engine vibration while increasing fuel economy.

**SUMMARY OF THE INVENTION**

According to a first aspect of the present invention, there is provided a torsional damper connecting an engine crankshaft and a transmission input member, as set forth in claim 1 of the appended claims.
According to a second aspect of the present invention, there is provided a damper assembly for decreasing torsional vibrations between an engine crankshaft and a torque converter, as set forth in claim 8 of the appended claims.

According to a third aspect of the present invention, there is provided a powertrain as set forth in claim 15 of the appended claims.

Preferably, each of the pockets has an axis tangential to the direction of rotation of the crankshaft, the axis being at an angle other than 90° relative to the angle of direction of rotation.

Additionally, a spacer fitted at least partially inside of each of the springs.

Advantageously, each of the spring pockets has a length and wherein the spacer has a length, the length of the pocket being longer than the length of the spacer.

Additionally, the spacer is formed from a polymerized material.

Preferably the powertrain further includes a ring gear fitted to the damper assembly.

The disclosed inventive concept provides a solution to the challenges associated with the reduction of engine vibration generally associated with smaller engines, generally having displacements of 1.5L and 1.0L, although the disclosed inventive concept may find application in any situation where a flexplate is incorporated into a vehicle drivetrain. In this way the flexplate according to the disclosed inventive concept may have a broad application in a wide variety of engine types.

Particularly, the disclosed inventive concept adds a torsional damper assembly to the traditional automobile flexible driving plate ("flexplate"). The flexible driving plate assembly is a very popular component in the automatically shifted vehicle. The disclosed inventive concept provides one more opportunity to dampen the torsional torque generated by the engine and to isolate the torsional vibration to the drive line system in front of the rear dampers, for instance in torque converter clutch ("TCC") dampers. The flexible driving plate of the disclosed inventive concept still functions as does a traditional stamped flexible plate by starting the vehicle by meshing with the starter motor gear and providing appropriate axial spring rate for torque converter connection.

The disclosed inventive concept provides a flexible driving plate assembly having a torsional damper assembly that connects an engine crankshaft and a transmission input member wherein the crankshaft has a rotational direction. The damper assembly comprises a drive plate connected to the crankshaft, a driven plate connected to the input member, a plurality of springs, and a like number of spring pockets in which the springs are fitted formed in both the drive plate and the driven plate. Each of the pockets has an axis tangential to the rotational direction of the crankshaft. Each axis is at an angle other than 90° relative to the angle of rotational direction of the crankshaft. The number of spring pockets can be varied per torque capacity and spring rate requirements. For example, the number of pockets could be reduced to possibly as low as three for low torque applications. The higher the torque application, the greater the number of spring pockets. Accordingly, the relative angle of the spring pockets can vary with the number. Thus, when three spring pockets are provided the angle of each pocket might be 120°, when four spring pockets are provided the angle of each pocket might be 90°, when five spring pockets are provided the angle of each pocket might be 72°, etc.

A spacer is provided substantially inside of each spring. The length of the spacer is less than the length of the pocket. The spacer may be composed of any of a variety of suitable polymerized materials, such as plastic or nylon.

The drive plate includes a first side and a second side. The damper further includes a first friction plate and a second friction plate. The first friction plate is fitted to the first side of the drive plate and the second friction plate is fitted to the second side of the drive plate. The first friction plate, the drive plate, and the second friction plate form a friction drive plate assembly.

A cover plate is provided for attaching the friction drive plate assembly to the driven plate. A starter ring gear is attached to the driven plate.

The disclosed inventive concept takes into consideration the fundamentals of vibration and damping which instruct that a dual mass-spring system can split vibration into two relatively smaller vibrations compared with a single mass-spring system. The disclosed inventive concept adds springs to the flexible driving plate and, by so doing, provides a dual mass spring system between the engine and drive line. This compares favorably with the traditional torque converter clutch damper system as a single mass-spring system.

An additional benefit of the flexible driving plate damper is the manipulation of the natural frequency of the system to a level below that of engine idle speed. The single stage spring on the flexible driving plate cannot accomplish this acting in isolation but can do so when combined with the torque converter clutch damper. The disclosed dual mass-spring system avoids the drive line resonance with the engine, allowing the torque converter clutch to be locked at extremely low engine speed without the complicated torque converter clutch damper design, a considerable advantage in terms of reducing both material and assembly cost without sacrificing performance.

The above advantages and other advantages and features will be readily apparent from the following detailed description of the preferred embodiments when taken in connection with the accompanying drawings.

**BRIEF DESCRIPTION OF THE DRAWINGS**

For a more complete understanding of this invention, reference should now be made to the embodiments illustrated in greater detail in the accompanying drawings and described below by way of examples of the invention wherein:

FIG. 1 illustrates an end view of the flexible driving plate and damper assembly of the disclosed inventive concept;
FIG. 2 illustrates is a perspective view of the flexible driving plate and damper assembly of the disclosed inventive concept;
FIG. 3 illustrates an exploded view of the flexible driving plate and damper assembly of the disclosed inventive concept; and
FIG. 4 illustrates a sectional view of the flexible driving plate and damper assembly of the disclosed inventive concept.

## DETAILED DESCRIPTION OF THE PREFERRED EMBODIMENT

In the following figures, the same reference numerals will be used to refer to the same components. In the following description, various operating parameters and components are described for different constructed embodiments. These specific parameters and components are included as examples and are not meant to be limiting.

In general, the disclosed inventive concept is a flexible driving plate that consists of a drive plate and a driven plate, connected by springs, and riveted to one another. The spring arrangement defines a damper.

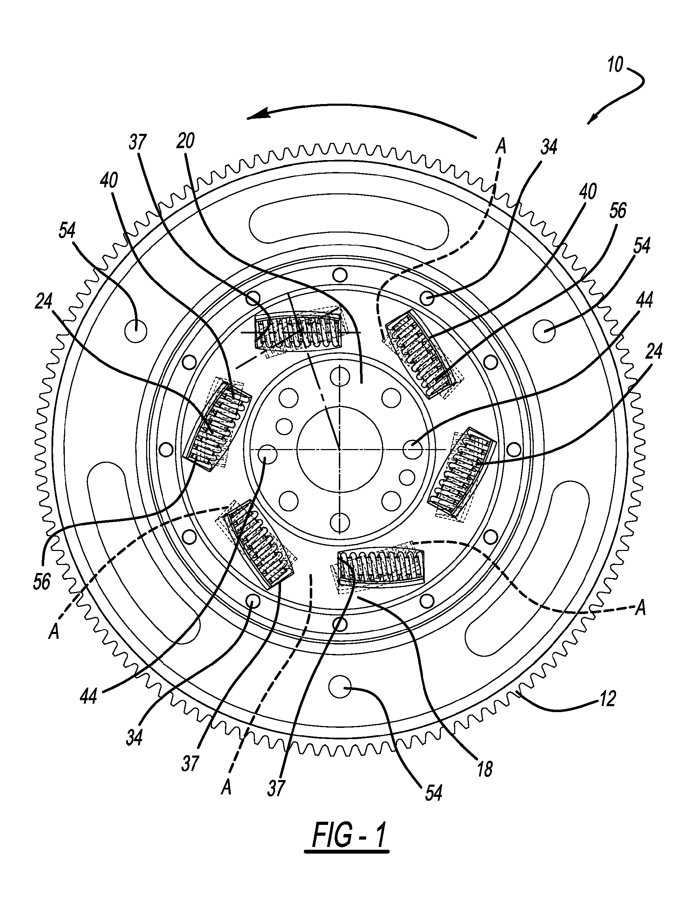

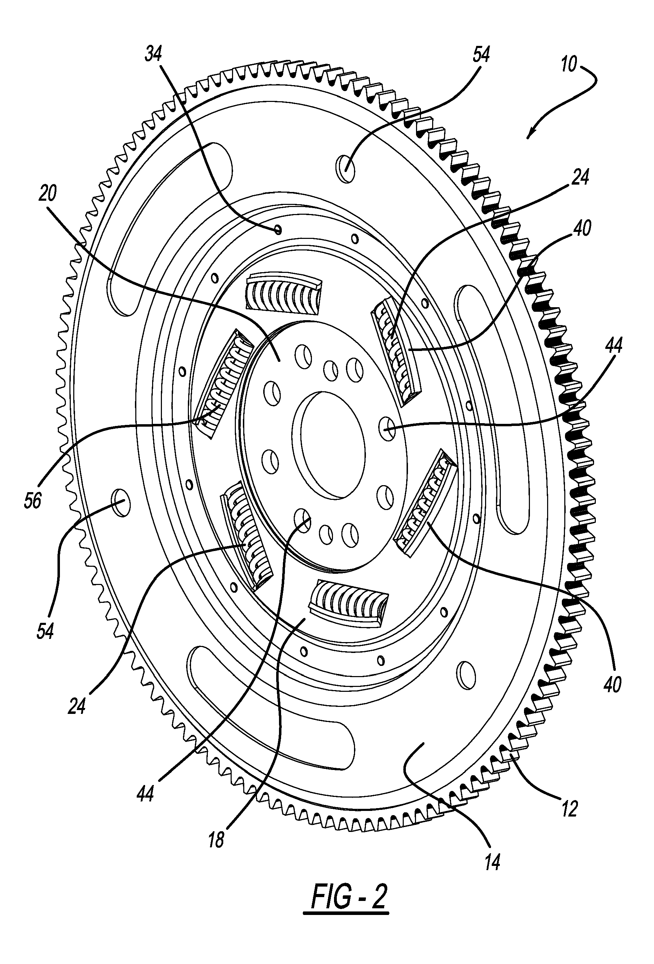

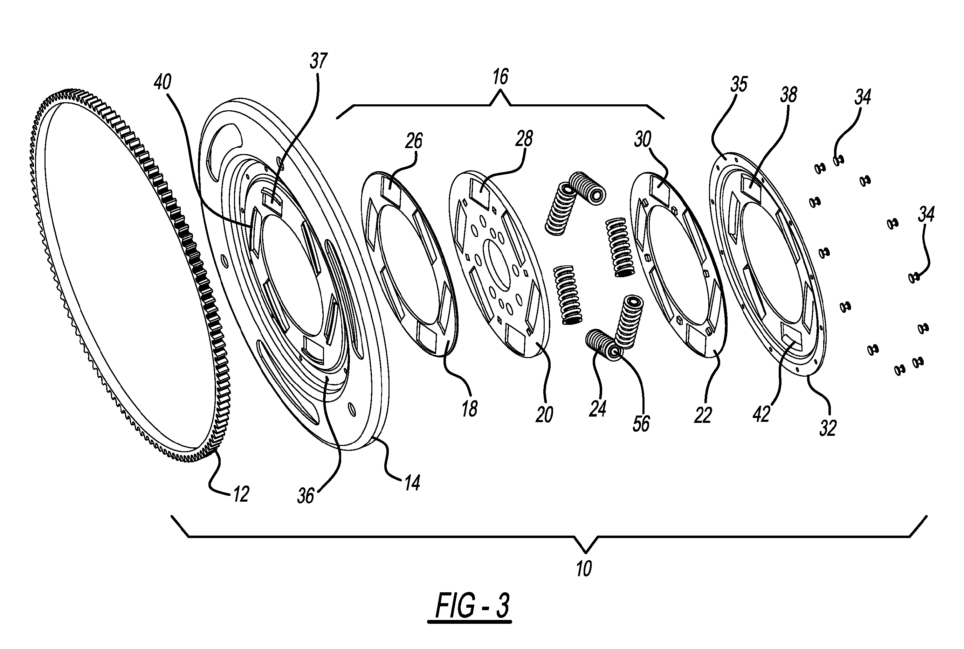

More particularly, and referring to Figures 1 through 4, an end view and a perspective view are respectively shown of a flexible driving plate assembly, generally illustrated as 10. The flexible driving plate assembly 10 comprises a ring gear 12 for selective engagement with a starter motor (not shown) fitted to a driven plate 14.

Within the flexible driving plate assembly 10 is a damper assembly 16 that comprises a first friction plate 18, a drive plate 20, and a second friction plate 22. The damper assembly 16 also includes a series of damping springs 24. The damping springs 24 are generally positioned within a like number of first friction plate spring pockets 26, drive plate spring pockets 28, and second friction plate spring pockets 30.

The springs damping 24, which connect the drive plate 20 and the driven plate 14 and which contact the spring pockets, are selected with care as each spring 24 must be strong enough to transmit maximum engine torque while being durable enough to provide good service without failure through the whole service life of the vehicle. The selection of the damping spring 24 must be made with an appropriate spring rate along with the choice of the torque converter clutch spring to achieve the lowest vibration frequency.

A damper assembly cover plate 32 is attached to the driven plate 14 by a plurality of mechanical fasteners such as rivets 34. The rivets 34 are fitted through rivet holes 35 formed in the damper assembly cover plate 32 and rivet holes 36 formed in the driven plate 14. The series of rivet holes 35 and 36 are round so as to prevent movement of the rivets 34 therein. Other fastening methods may be employed. In this manner the damper assembly cover plate 32 fixes the damper assembly 16 to the driven plate 14.

During the manufacturing process, the series of rivet holes 35 and 36 are punched with very narrow clearances with respect to the rivets 34. By so doing, the driven plate 14 can rotate freely against the drive plate 20 guided by the rivets 23. The length can be chosen to achieve appropriate angular displacement freedom.

The driven plate 14 includes a series of driven plate spring pockets 37 while the damper assembly cover plate 32 includes a like number of damper assembly cover plate spring pockets 38. Each of the driven plate spring pockets 36 includes a spring retaining flange 40 while each of the damper assembly cover plate spring pockets 38 includes a spring retaining flange 42. The spring retaining flanges 40 and 42 restrain the damping springs 24

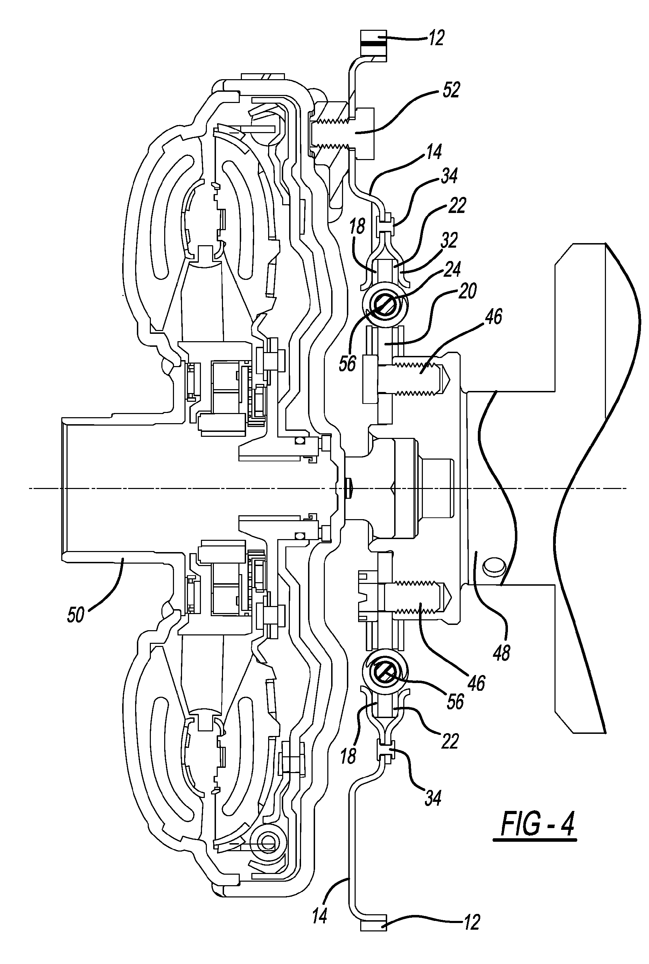

Formed in the driven plate 20 are a series of mounting holes 44 for bolts 46 (shown in Figure 4) for attachment of the flexible driving plate assembly 10 to an engine crankshaft 48 (shown in Figure 4). Thus the torque to the drive plate 20 comes from the engine or electric motor.

The driven plate 14 is connected to a torque converter 50 by way of mounting bolts 52 (one shown in Figure 4) through holes 54 formed in the driven plate 14.

To limit the relative angular displacement between the drive plate 20 and the driven plate 14, spacers 56, preferably composed of a polymerized material such as a plastic, are fitted generally inside of each of the damping springs 24. The spacers 56 are each shorter than the lengths of the spring pockets 26, 28, 30, 38 and 40, thus the angular displacement of the driven plate 14 against the drive plate 20 cannot exceed the length difference between the spacers 56 and the spring pockets 26, 28, 30, 38 and 40.

As noted above, the disclosed inventive concept provides a torsional damper that connects the engine crankshaft 48 and the transmission input member or torque converter 50 wherein the engine crankshaft 48 has a rotational direction. Each of the spring pockets 26, 28, 30, 38 and 40 has an axis that is tangential to the rotational direction of the engine crankshaft 48. Each axis is at an angle other than 90° relative to the angle of rotational direction of the crankshaft. As illustrated in Figure 1, a conventional linear spring layout is shown by the standard placement of known spring-pocket combinations illustrated as "A" shown in broken lines. The long axis of the springs 24 of the disclosed inventive concept are off-axis when compared with the long axis of the springs shown as "A."

In operation, when there is torsional vibration transmitted between the drive plate 20 and the driven plate 14, the drive plate 20 and the driven plate 14 rotate against each other, thus compressing the damping springs 24. The contacting surface area of the two plates 14 and 20 provide superior damping as friction exists between them. Accordingly, the contacting surface areas of each of the drive plate 20 and the driven plate 14 must be hardened for durability yet must not be machined to too great a degree of smoothness otherwise the necessary friction force will not be created. Another method to achieve the friction force target is to apply sufficient clamping load to the drive plate 20 and the driven plate 14 which can be done by adjusting the riveting process.

The disclosed flexible driving plate assembly 10 of the disclosed inventive concept effectively reduces torsional vibration created by today's systems. Particularly, the disclosed flexible driving plate assembly 10 in combination with the torque converter provides a system of a series of springs, wherein the total spring rate may be written as:

$$K=1/(1/K1+1/K2)=K1*K2/(K1+K2)=K2*[K1/(K1+K2)]$$

As illustrated, the total spring rate of the crank shaft to transmission system is lower down by applying the damping spring in the disclosed flexible driving plate assembly 10 as K1/(K1+K2) is always less than 1.

The system frequency equals to:

$f=(K/I)^{(1/2)}$, where I is the total inertia of the system.

Accordingly, based on the above equation the system frequency is lowered as the spring rate decrease.

Beyond reducing torsional vibration as set forth above, the flexible driving plate assembly 10 of the disclosed inventive concept improves fuel economy of the vehicle as it can make the torque converter 50 lock in at a lower engine speed, thus provides a solution to the severe torsional vibration and undesired power train resonance experienced in today's three cylinder combustion engine. The flexible driving plate assembly 10 can also be used in the drive train of a hybrid vehicle to resolve known severe electric motor start shudder.

**Claims**

1. A torsional damper connecting an engine crankshaft and a transmission input member, the crankshaft having a rotational direction, the damper comprising:

   a drive plate connected to the crankshaft;
   a driven plate connected to the input member;
   springs;
   spring pockets in which said springs are fitted formed in said plates, each pocket having an axis tangential to the rotational direction, said axis being at an angle other than 90° relative to the angle of rotational direction.

2. The torsional damper of Claim 1, further including a spacer fitted inside of each of said springs.

3. The torsional damper of Claim 2, wherein each of said pockets has a length and wherein said spacer has a length, said length of said pocket being longer than the length of said spacer.

4. The torsional damper of Claim 3, wherein said spacer is formed from a polymerized material.

5. The torsional damper of any preceding Claim, wherein said drive plate includes a first side and a second side, said damper further including a first friction plate and a second friction plate, said first friction plate being fitted to said first side of said drive plate and said second friction plate being fitted to said second side of said drive plate, said first friction plate, said drive plate, and said second friction plate forming a friction drive plate assembly.

6. The torsional damper of Claim 5, further including a cover plate for attaching said friction drive plate assembly to said driven plate.

7. The torsional damper of any preceding Claim, further including a ring gear attached to said driven plate.

8. A damper assembly for decreasing torsional vibrations between an engine crankshaft and a torque converter, the crankshaft having a direction of rotation, the assembly comprising:

> a drive plate having a crankshaft attachment face;
> a driven plate having a torque converter attachment face;
> springs;
> spring pockets in which said springs are fitted formed in said plates, each pocket having an axis that is non-linear relative to the direction of rotation of the crankshaft.

9. The damper assembly of Claim 8, further including a spacer fitted inside of each of said springs.

10. The damper assembly of Claim 9, wherein each of said pockets has a length and wherein said spacer has a length, said length of said pocket being longer than the length of said spacer.

11. The damper assembly of Claim 10, wherein said spacer is formed from a polymerized material.

12. The damper assembly of Claims 8 to 11, wherein said drive plate includes a first side and a second side, said damper further including a first friction plate and a second friction plate, said first friction plate being fitted to said first side of said drive plate and said second friction plate being fitted to said second side of said drive plate, said first friction plate, said drive plate, and said second friction plate forming a friction drive plate assembly.

13. The damper assembly of Claim 12, further including a cover plate for attaching said friction drive plate assembly to said driven plate.

14. The damper assembly of Claims 8 to 13, further including a ring gear attached to said driven plate.

15. A powertrain comprising:

> an engine having a crankshaft, the crankshaft having a direction of rotation;
> a transmission having an input member;
> a damper assembly connecting said crankshaft and said input member, said damper assembly including a flexplate, said flexplate having springs and spring pockets formed therein, each of said pockets having an axis, said axis being is non-linear relative to the direction of rotation of the crankshaft.

_FIG - 1_

_FIG - 2_

_FIG - 3_

EP 2 942 544 A1

_FIG - 4_

Europäisches
Patentamt

European
Patent Office

Office européen
des brevets

## EUROPEAN SEARCH REPORT

**Application Number**

EP 15 16 2855

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S63 210435 A (FUJI HEAVY IND LTD) 1 September 1988 (1988-09-01) | 1,5-7 | INV. F16F15/123 |
| Y | * figures 3,5 * | 2-4 | |
| X | DE 39 38 724 A1 (FICHTEL & SACHS AG [DE]) 29 May 1991 (1991-05-29) | 8,11-15 | |
| Y | * figure 2 * | 8-10 | |
| Y | EP 1 521 002 A2 (AISIN SEIKI [JP]) 6 April 2005 (2005-04-06) * figure 5 * | 2-4,8-10 | |

**TECHNICAL FIELDS SEARCHED (IPC)**

F16F

The present search report has been drawn up for all claims

| Place of search | Date of completion of the search | Examiner |
|---|---|---|
| The Hague | 21 September 2015 | Beaumont, Arnaud |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

**ANNEX TO THE EUROPEAN SEARCH REPORT
ON EUROPEAN PATENT APPLICATION NO.**

EP 15 16 2855

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2015

| Patent document cited in search report | | Publication date | Patent family member(s) | | Publication date |
|---|---|---|---|---|---|
| JP S63210435 | A | 01-09-1988 | JP | H081234 B2 | 10-01-1996 |
| | | | JP | S63210435 A | 01-09-1988 |
| DE 3938724 | A1 | 29-05-1991 | DE | 3938724 A1 | 29-05-1991 |
| | | | US | 5086892 A | 11-02-1992 |
| EP 1521002 | A2 | 06-04-2005 | CN | 1603654 A | 06-04-2005 |
| | | | EP | 1521002 A2 | 06-04-2005 |
| | | | JP | 4455858 B2 | 21-04-2010 |
| | | | JP | 2005106158 A | 21-04-2005 |
| | | | US | 2005070363 A1 | 31-03-2005 |

EPO FORM P0459